# EUROPEAN PATENT APPLICATION

(11) **EP 4 365 632 A1**
(43) Date of publication of application: **08.05.2024**
(21) Application number: 22207197.9
(22) Date of filing: 14.11.2022
(51) Int. Cl.: G01S 13/72, G01S 7/41, G01S 13/34, G01S 13/42, G01S 13/58

(54) **POSTURE RECOGNITION APPARATUS USING RADAR**

(30) Priority: 01.11.2022 KR 20220143469
(71) Applicant: Smart Radar System, Inc., Seongnam-si, Gyeonggi-do 13496 (KR)
(72) Inventor: Kim, Soung On, Anyang-si, Gyeonggi-do 14033 (KR); Marseille, Gauvain Jacques, Seoul 08728 (KR); Shin, Min Seong, Seoul 08748 (KR)
(74) Representative: Grünecker Patent- und Rechtsanwälte PartG mbB

(57) **Abstract**

A posture recognition apparatus using radar according to the present invention includes a radar sensor module configured to process reflected signals reflected from objects positioned in a detection region and output a four-dimensional (4D) point cloud in units of frames, a tracking module configured to track the objects in the output 4D point cloud and reflect a position recognition result fed back from a posture recognition module to track the objects, and the posture recognition module configured to classify types of the objects for each track using a deep learning model based on pieces of output information about tracks, recognize a posture when the object is a person as a classification result of the track, and feed a posture recognition result of the corresponding track back to the tracking module.

## Description

### CROSS-REFERENCE TO RELATED APPLICATION(S)

This application claims priority from Korean Patent Application No. 10-2012-0064514, filed on June 15, 2012, in the Korean Intellectual Property Office, the disclosure of which is incorporated herein by reference in its entirety.

### BACKGROUND

### 1. Field

The following description relates to a technology for processing a radar signal, and more particularly, to a technology for processing a radar signal to track an object in a detection region and recognize a posture of the object.

### 2. Description of Related Art

With the development of radar technology, a four-dimensional (4D) image radar sensor that outputs a 4D point cloud has appeared. A point cloud is a distribution of points in a space, and each of the points has coordinate information in a space. Doppler velocity information is added to three-dimensional (3D) coordinate information of a 4D point cloud obtained by processing a radar signal.

There is a technology for using a 4D image radar sensor to track a person in a detection region and recognize a posture of the person. Such a technology generally includes a radar sensor module which processes a radar signal and outputs a 4D point cloud for detected objects, a tracking module which tracks the objects using the 4D point cloud, and a posture recognition module which recognizes a type and posture of the object using a tracking result as an input.

However, when a 4D image radar sensor is used to track an object and recognize a posture thereof, in a case in which the object stops without moving, due to the characteristics of the 4D image radar sensor, there is a situation in which a point cloud for the object is hardly collected, and thus, since in a tracking process, the object is treated as disappearing and is excluded from a tracking target, there is a problem in that a posture of the corresponding object is not properly recognized.

### SUMMARY

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

The following description relates to a posture recognition apparatus capable of continuously tracking even an object that temporarily does not move or hardly moves in a detection region.

In one general aspect, a posture recognition apparatus using radar includes a radar sensor module, a tracking module, and a posture recognition module.

The radar sensor module may process reflected signals reflected from objects positioned in a detection region and may output a four-dimensional (4D) point cloud in units of frames.

The tracking module may include a prediction unit configured to track the objects in the output 4D point cloud and predict a position and a Doppler velocity of a track in a current frame, a track association unit configured to associate points with an allocated track, a track allocation unit configured to allocate a new track to points not associated with the track, a track update unit configured to update the position and the Doppler velocity of the track in the current frame based on information about points associated with the track and a predicted track position and Doppler velocity of the track, and a track report unit configured to determine whether to keep or remove tracks and output pieces of information about tracks determined to be kept.

The posture recognition module may classify types of the objects for each track using a deep learning model based on the pieces of output information about the tracks. In this case, the posture recognition module may recognize a posture when the object is a person as a classification result of the track and may feed a posture recognition result of the corresponding track back to the tracking module.

Additionally, the tracking module may further include a feedback storage unit to receive feedback on the posture recognition result for each track by the posture recognition module and store the feedback to reflect the feedback in tracking of a next frame.

In an aspect, the track association unit may determine points to be included in the corresponding track according to a recognized posture with respect to a track for which posture classification results of previous frames are stored in the feedback storage unit.

In an aspect, the track allocation unit may determine whether to allocate a new track to points, which are not associated with a track around a track for which posture classification results of previous frames are stored in the feedback storage unit, according to a recognized posture with respect to the corresponding track.

In an aspect, the track update unit may determine whether to update a position and a Doppler velocity of the corresponding track according to a recognized posture with respect to a track for which posture classification results of previous frames are stored in the feedback storage unit.

In an aspect, the track report unit may determine whether to remove or keep a track, in which a position of the track is not updated, according to a recognized posture with respect to a track for which posture classification results of previous frames are stored in the feedback storage unit.

Other features and aspects will be apparent from the following detailed description, the drawings, and the claims.

### BRIEF DESCRIPTION OF THE DRAWINGS

FIG. 1 is a conceptual block diagram of a posture recognition apparatus of the present invention.
FIG. 2 is a block diagram illustrating a concept in which a track association unit of a tracking module uses posture recognition result feedback of a posture recognition module according to an aspect of the present invention.
FIG. 3 is a block diagram illustrating a concept in which a track allocation unit of the tracking module uses posture recognition result feedback of the posture recognition module according to another aspect of the present invention.
FIG. 4 is a block diagram illustrating a concept in which a track update unit of the tracking module uses posture recognition result feedback of the posture recognition module according to still another aspect of the present invention.
FIG. 5 is a block diagram illustrating a concept in which a track report unit of the tracking module uses posture recognition result feedback of the posture recognition module according to yet another aspect of the present invention.
FIG. 6 is a block diagram illustrating a concept in which the tracking module uses posture recognition result feedback of the posture recognition module according to yet another aspect of the present invention.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The above-described and additional aspects are embodied through embodiments described with reference to the accompanying drawings. It will be understood that components of each of the embodiments may be combined in various ways within one embodiment unless otherwise stated or contradicted by each other. Each of the blocks in a block diagram may be a representation of a physical part in some cases but may be a logical representation of a portion of a function of one physical part or a function of a plurality of physical parts in other cases. In some cases, the block or an entity of a portion of the block may be a set of program instructions. All or some of the blocks may be implemented as hardware, software, or a combination thereof.

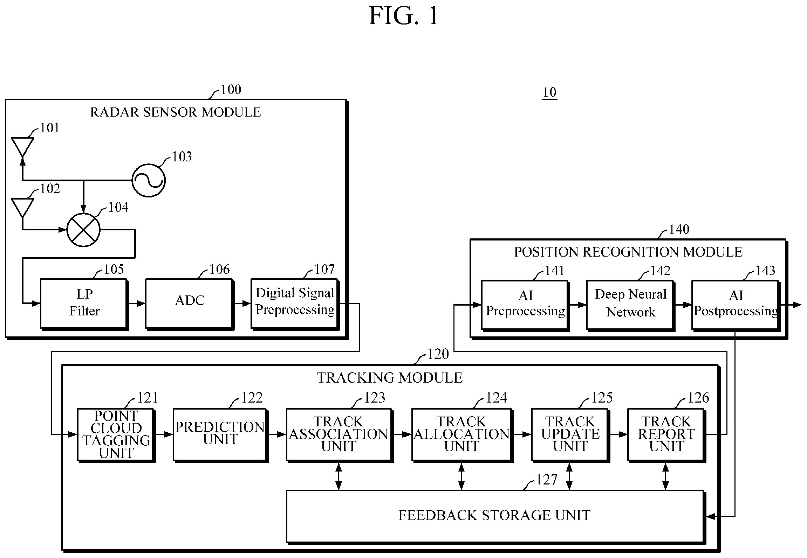

FIG. 1 is a conceptual block diagram of a posture recognition apparatus of the present invention. The posture recognition apparatus using radar according to an aspect of the present invention includes a radar sensor module, a tracking module, and a posture recognition module.

The posture recognition apparatus is implemented by including a radar sensor and a signal processing device connected to an output terminal of the radar sensor. The signal processing device may be a computing device including a microprocessor and a memory.

The radar sensor module processes a reflected signal reflected from an object positioned in a detection region and outputs a four-dimensional (4D) point cloud in units of frames. The radar sensor module of the present invention is a 4D image radar sensor.

The radar sensor module conceptually shown in FIG. 1 adopts a frequency-modulated continuous wave radar (FMCW) method, but the present invention is not limited thereto. The radar sensor module may be a radar device using another method. A variable frequency oscillator 103 generates an FMCW radar waveform transmission signal. As an example, the variable frequency oscillator 103 generates and outputs an FMCW radar waveform signal of which a frequency linearly rises and then falls during a period called a chirp according to a modulation/demodulation control signal. A frequency modulation signal oscillated by the variable frequency oscillator 103 is transmitted to a transmission antenna 101 through a power amplifier (not shown). The FMCW radar waveform signal transmitted through the transmission antenna 101 is reflected from a target, that is, an object, and is received by a reception antenna 102.

The transmission antenna 101 and the reception antenna 102 are implemented as micro-patch antennas. Although only one transmission antenna and only one reception antenna are illustrated in FIG. 1, this is merely exemplary, and a plurality of transmission antennas and a plurality of receptions antennas may be provided in different numbers. By comparing an FMCW radar waveform signal transmitted from one transmission antenna with an FMCW radar waveform signal received through one reception antenna, a delay value and a Doppler shift may be measured to measure a radial velocity of a target and a distance to the target. The radial velocity of the target and the distance to the target may be calculated for each channel including a pair of one transmission antenna and one reception antenna. In addition, an angular displacement may be measured through a plurality of transmission antennas and a plurality of reception antennas.

A reflected signal received by the reception antenna 102 is amplified by a low-noise amplifier (not shown), demodulated by a demodulator 104, and then converted into a demodulated baseband signal. Next, the demodulated baseband signal passes through a low-pass filter 105 and is converted into a digital signal by an analog-to-digital converter 106. Then, the digital signal is input to a digital signal processing unit 107. The digital signal processing unit 107 processes the digital signal to detect an object and outputs a 4D point cloud composed of three-dimensional coordinates and a Doppler velocity of the object for every frame.

The tracking module may be implemented as a set of program instructions such that at least a portion of a function thereof is executed in the microprocessor of the signal processing device. The tracking module includes a point cloud tagging unit, a prediction unit, a track association unit, a track allocation unit, a track update unit, and a track report unit to track objects in a 4D point cloud. The point cloud tagging unit, the prediction unit, the track association unit, the track allocation unit, the track update unit, and the track report unit may also be implemented as a set of program instructions such that at least a portion of a function thereof is executed in the microprocessor of the signal processing device.

The point cloud tagging unit removes points outside a region of interest (ROI) in the 4D point cloud output by the radar sensor module to prevent unnecessary calculations in a subsequent track association procedure or track allocation procedure.

The prediction unit performs an operation of predicting a position and a Doppler velocity of a track in a current frame. The prediction unit predicts a center position and a Doppler velocity of a track in a current frame based on a center position and a Doppler velocity of a track in a previous frame.

The track association unit performs a procedure of associating points with a track that is previously allocated and is being tracked. That is, the track association unit finds points corresponding to a track that is already allocated in a 4D point cloud of a current frame and associates the corresponding points with the corresponding track. When points are close to a predicted center of a track, the track association unit associates the point, of which a Doppler velocity is similar to that of the track, with the corresponding track.

The track allocation unit performs a procedure of newly generating and allocating a track for a new object. In a track association procedure, a new track is allocated to points not associated with a track. The track allocation unit combines points into a set based on proximity in measurement coordinates, makes the points candidates for allocation determination, performs a plurality of preset tests thereon, and allocates a new track to the candidates when the candidates pass the tests.

The track update unit updates a position and a Doppler velocity of a track in a current frame based on information about points associated with a track and a predicted position and Doppler velocity of the track. That is, the track update unit updates a position and a Doppler velocity of a track with respect to a continuously moving object for each frame.

The track report unit determines whether tracks are updated, determines to keep tracks that are continuously updated, determines that no updated tracks have disappeared, and determines to remove the no updated tracks. The track report unit outputs pieces of information about the tracks which are determined to be kept. Information about a track includes a position and a Doppler velocity of a track and point cloud information for each track.

The posture recognition module classifies types of objects using a trained deep learning model and recognizes and outputs postures thereof. The posture recognition module includes a preprocessing unit 141 which converts track information for each track into input data of a deep learning model, a deep learning model 142 trained to classify types of objects and recognize postures thereof, and a postprocessing unit 143 which performs a function of processing an output result of the deep learning model 142 and displaying the processed output result in a three-dimensional coordinate space of a detection region. In this case, when, as a classification result, an object is a person, the posture recognition module recognizes a posture and feeds a posture recognition result of a corresponding track back to the tracking module.

An algorithm of the deep learning model included in the posture recognition module is not limited. However, the deep learning model may be a deep learning model based on a convolutional neural network (CNN) algorithm specialized for image recognition. Alternatively, in particular, when a plurality of radar sensor modules are present to collect point clouds from a detection region in various directions, the deep learning model may be a deep learning model based on a multi-view CNN (MVCNN) algorithm. However, the present invention is not limited thereto.

Additionally, the tracking module further includes a feedback storage unit which is a storage space allocated to a memory. The tracking module receives feedback on a posture recognition result for each track by the posture recognition module and stores the feedback in the feedback storage unit in order to reflect the feedback in tracking of a next frame.

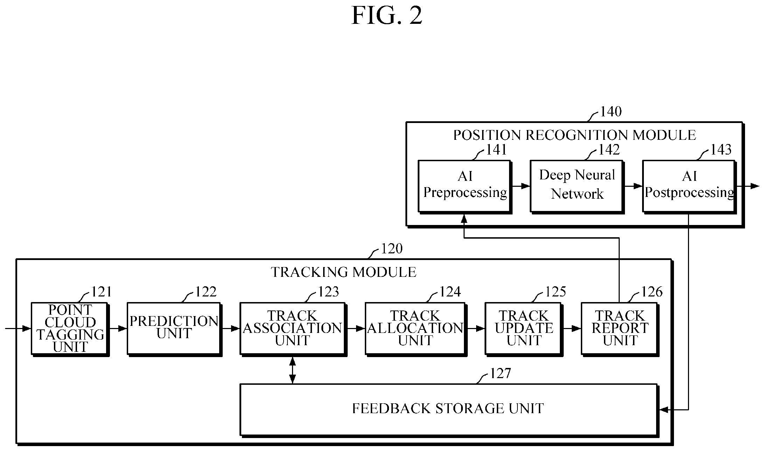

FIG. 2 is a block diagram illustrating a concept in which the track association unit of the tracking module uses posture recognition result feedback of the posture recognition module according to an aspect of the present invention. According to an aspect of the invention, as shown in FIG. 2, with reference to the feedback storage unit, the track association unit may determine points to be included in a corresponding track according to a recognized posture with respect to a track for which posture classification results of previous frames are stored in the feedback storage unit. When an object to be tracked is a person, a posture recognition result of the corresponding object by the posture recognition unit is fed back and stored in the feedback storage unit. The track association unit may differently perform a calculation for associating with a track based on a fed back posture. For example, when a fed back posture of a track is a sitting posture, as compared with a standing posture, only points in a narrow region along a z-axis are associated with the corresponding track, and when a fed back posture of a track is a lying posture, in a narrow region along the z-axis, points in a wide region along an x-axis or y-axis may be associated with the corresponding track. Accordingly, the track association unit may reflect a fed back posture recognition result of the posture recognition unit in a track association procedure to prevent points of a track positioned close to each other from being mixed according to a posture.

In particular, even when an object does not move or hardly moves and thus a point cloud of the corresponding object is hardly collected, without ignoring corresponding points, the track association unit may associate the corresponding points with a corresponding track based on a posture of a track stored in the feedback storage unit, thereby preventing the track from being removed.

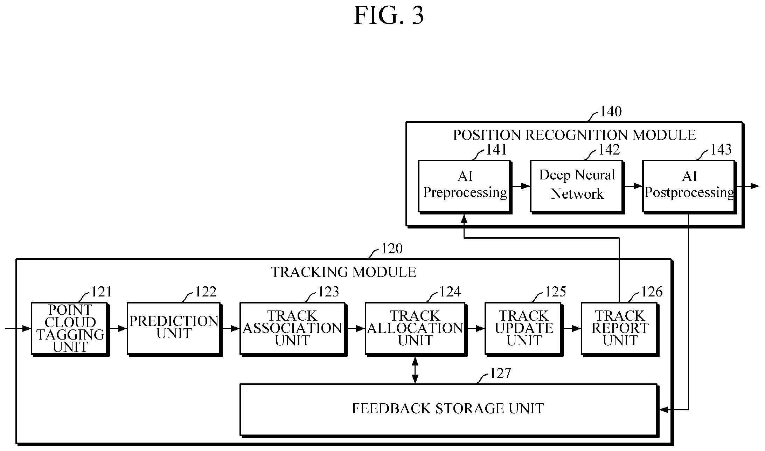

FIG. 3 is a block diagram illustrating a concept in which the track allocation unit of the tracking module uses posture recognition result feedback of the posture recognition module according to another aspect of the present invention. According to an aspect of the invention, as shown in FIG. 3, with reference to the feedback storage unit, the track allocation unit may determine whether to allocate a new track to points, which are not associated with to a track around a track for which posture classification results of previous frames are stored in the feedback storage unit, according to a recognized posture with respect to the corresponding track. When an object to be tracked is a person, a posture recognition result of the corresponding object by the posture recognition unit is fed back and stored in the feedback storage unit. The track allocation unit may differently perform a calculation of allocating a new track based on a fed back posture. For example, in a case in which a fed back posture of a track is a lying posture, when z-coordinate values of unallocated points are the same as a range of z-coordinate values of points included in the track, and in a case in which x-coordinate values (or y-coordinate values) thereof are similar to a range of x-coordinate values (or y-coordinate values) of the points included in the track, a new track positioned close to the corresponding track may not be generated.

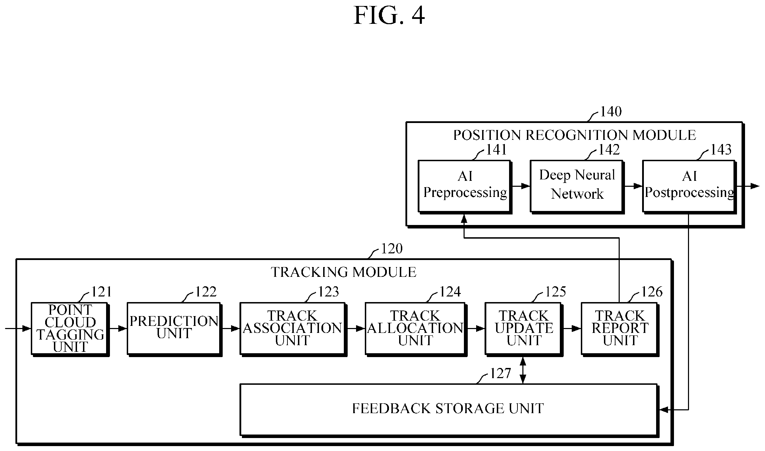

FIG. 4 is a block diagram illustrating a concept in which the track update unit of the tracking module uses posture recognition result feedback of the posture recognition module according to still another aspect of the present invention. According to an aspect of the invention, the track update unit may determine whether to update a position and a Doppler velocity of a corresponding track according to a recognized posture with respect to a track for which posture classification results of previous frames are stored in the feedback storage unit. When an object to be tracked is a person, a posture recognition result of the corresponding object by the posture recognition unit is fed back and stored in the feedback storage unit. The track update unit may not update a track based on a fed back posture. For example, when a fed back posture of a track is a lying posture and the number of points allocated to the corresponding track is less than or equal to a certain number, a calculation for updating a position and a Doppler velocity of the track may be omitted.

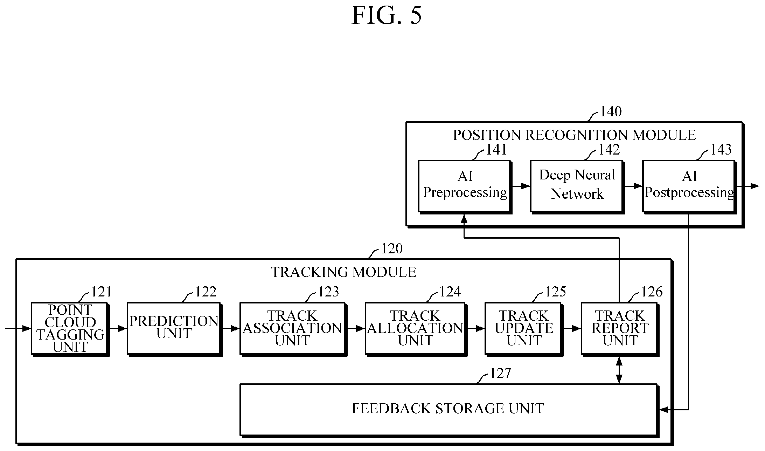

FIG. 5 is a block diagram illustrating a concept in which the track report unit of the tracking module uses posture recognition result feedback of the posture recognition module according to yet another aspect of the present invention. According to an aspect of the invention, the track report unit may determine whether to remove or keep a track, in which a position of the track is not updated, according to a recognized posture with respect to a track for which posture classification results of previous frames are stored in the feedback storage unit. When an object to be tracked is a person, a posture recognition result of the corresponding object by the posture recognition unit is fed back and stored in the feedback storage unit. In general, no updated track is considered to have disappeared, and the no updated track is removed. However, even when a track is not updated, based on a fed back posture, the track report unit may keep a track without deleting the track for a preset certain time, that is, a certain number of frames. As an example, the track report unit may count the number of frames in which a track is not continuously updated and may delete the corresponding track only when a preset threshold value is exceeded. The threshold value may be determined in consideration of the characteristics of a detection region. For example, when the detection region is a hospital room, the threshold value may be set to be large.

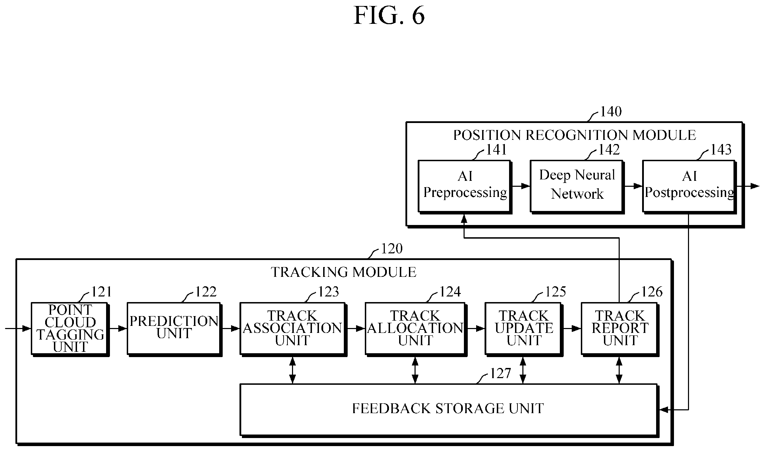

FIG. 6 is a block diagram illustrating a concept in which the tracking module uses posture recognition result feedback of the posture recognition module according to yet another aspect of the present invention. An example shown in FIG. 6 is an example in which all of the track association unit, the track allocation unit, the track update unit, and the track report unit perform a procedure with reference to a fed back posture recognition result stored in the feedback storage unit. Unlike that shown in FIG. 6, two or more of the track association unit, the track allocation unit, the track update unit, and the track report unit may be combined to perform the procedure with reference to the stored fed back posture recognition result.

According to the present invention, it is possible to continuously track even an object that does not temporarily move or hardly moves within a detection region.

The present invention has been described through embodiments with reference to the accompanying drawings but is not limited thereto. Rather, the present invention should be construed as encompassing various modifications that may be apparent to those skilled in the art. The appended claims are intended to include such modifications.

## Claims

1. A posture recognition apparatus using radar, comprising:
a radar sensor module configured to process reflected signals reflected from objects positioned in a detection region and output a four-dimensional (4D) point cloud in units of frames;
a tracking module which includes a prediction unit configured to predict a position and a Doppler velocity of a track in a current frame, a track association unit configured to associate points with an allocated track, a track allocation unit configured to allocate a new track to points not associated with the track, a track update unit configured to update the position and the Doppler velocity of the track in the current frame based on information about points associated with the track and a predicted track position and Doppler velocity of the track, and a track report unit configured to determine whether to keep or remove tracks and output pieces of information about tracks determined to be kept; and
a posture recognition module configured to classify types of the objects for each track using a deep learning model based on the pieces of output information about the tracks, recognize a posture when the object is a person as a classification result of the track, and feed a posture recognition result of the corresponding track back to the tracking module,
wherein the tracking module further includes a feedback storage unit to receive feedback on the posture recognition result for each track by the posture recognition module and store the feedback to reflect the feedback in tracking of a next frame.

2. The posture recognition apparatus of claim 1, wherein the track association unit determines points to be included in the corresponding track according to a recognized posture with respect to a track for which posture classification results of previous frames are stored in the feedback storage unit.

3. The posture recognition apparatus of claim 1, wherein the track allocation unit determines whether to allocate a new track to points, which are not associated with a track around a track for which posture classification results of previous frames are stored in the feedback storage unit, according to a recognized posture with respect to the corresponding track.

4. The posture recognition apparatus of claim 1, wherein the track update unit determines whether to update a position and a Doppler velocity of the corresponding track according to a recognized posture with respect to a track for which posture classification results of previous frames are stored in the feedback storage unit.

5. The posture recognition apparatus of claim 1, wherein the track report unit determines whether to remove or keep a track, in which a position of the track is not updated, according to a recognized posture with respect to a track for which posture classification results of previous frames are stored in the feedback storage unit.
